Europäisches Patentamt

European Patent Office

Office européen des brevets

(19)

(11) Publication number:

**0 271 094**
**A2**

## EUROPEAN PATENT APPLICATION

(21) Application number: 87118295.2

(22) Date of filing: 10.12.87

(51) Int. Cl.⁴: **H04B 1/66** , H04B 1/56

(30) Priority: 12.12.86 US 940817

(43) Date of publication of application:
15.06.88 Bulletin 88/24

(84) Designated Contracting States:
AT BE CH DE FR GB IT LI LU NL SE

(71) Applicant: **MOTOROLA INC.**
**Motorola Center 1303 Algonquin Rd.**
**Schaumburg Illinois 60196(US)**

(72) Inventor: **Lynk, Charles Nelson, Jr.**
**1201 Circle Lane**
**Bedford Texas 76022(US)**
Inventor: **Schorman, Eric Reed**
**1304 Wedglea Drive**
**Bedford Texas 76021(US)**

(74) Representative: **Hudson, Peter David et al**
**Motorola Ltd. Patent and Licensing**
**Operations - Europe Jays Close Viables**
**Industrial Estate**
**Basingstoke Hampshire RG22 4PD(GB)**

(54) **Method and apparatus for a burst analog two-way communications system.**

(57) A signal to be transmitted, such as voice, is converted into digital format and stored. The digital signal is then retrieved at a faster rate than it was originally digitized, and converted again to an analog form which represents the initial analog signal as compressed in time. A carrier signal is then modulated with this compressed analog signal and transmitted. Upon reception, the procedure is reversed. Transmission and reconstruction of such signals can be controlled by a central unit to improve spectral efficiency and minimize transmission collisions.

EP 0 271 094 A2

## METHOD AND APPARATUS FOR A BURST ANALOG TWO-WAY COMMUNICATIONS SYSTEM

### Technical Field

This invention relates generally to two-way communications systems, and in particular to time compression and time expansion (companding) of analog signals.

### Background Art

Two-way communications via modulation of radio frequency carrier signals is well known in the prior art. As demand for such communications resources continues to grow, however, and since the available carrier signal frequencies constitute an essentially fixed resource that must be allocated carefully to meet all available needs, an increasing demand exists for spectrally efficient two-way communications systems.

One technique for achieving such efficiency comprises transmission of information on a communication channel in time compression multiplexed (TCM) form. A TCM communication system samples and stores an analog signal in an analog storage means such as a delay line or gated capacitor device. These samples are later extracted from the analog storage means and transmitted at a high rate of speed. In this way, the analog signal can be compressed as a function of time, and several messages may be sent over the same communication channel in the same relevant time frame.

From a digital standpoint, the prior art also contemplates time division multiplexing (TDM) of several digital signals. In a TDM system, a dedicated communication channel will be divided into a plurality of time slots. A transceiving device may transmit or receive information in one or more of these slots as assigned or otherwise determined. To satisfactorily transmit a voice signal, the voice message must be digitized and stored in a digital storage means such as a shift register or random access memory. The storage message can later be extracted at a higher rate of speed and transmitted in at least one of the above noted time slots. In this way, again, several transceiving devices can share the same communication channel.

Both of the above noted systems, while offering advantageous spectral efficiencies, also result in various compromises as regards performance, range, ease of operation, and the like. There therefore exists a need for an alternative spectrally efficient communication system capable of accommodating increased information transmission while making use of previously existing channel assignments.

### Summary of the Invention

The above needs are substantially met through provision of the method and apparatus for a burst analog two-way communications system as described herein. This system contemplates use of radio transceivers having a microphone for receiving an acoustic input signal, and a transmission signal processing unit for receiving the microphone's output and for converting it into an analog output signal.

In general, the transmission signal processing unit includes an analog to digital conversion unit for converting the microphone signal into digitized form at a first rate, memory for storing that digitized data, a retrieval unit for causing retrieval of the digitized data at a second rate which is faster than the first rate, and a digital to analog conversion unit for converting the retrieved digitized data into an analog output signal that comprises the initial analog signal as compressed in time. A carrier signal can then be modulated with this analog output signal to provide a compressed (burst) analog signal suitable for transmission by a transmitter.

The radio transceivers can further include a reception signal processing unit for essentially reversing the above process by converting the time compressed analog signals into digital form, storing them, and retrieving them at a slower rate to output an analog signal at the original time rate, which signal can then be rendered audible for benefit of the radio operator.

Since the digitized signals are stored prior to reconstruction into a time compressed analog signal, the retrieval process can be made subject to transmission grant commands by a central control unit. In this way, spectral efficiency can be further enhanced and transmission collisions between competing units minimized.

### Brief Description of the Drawings

These and other attributes of the invention will become more clear upon making a thorough review and study of the following description of the best mode for carrying out the invention, particularly when reviewed in conjunction with the drawings, wherein:

Fig. 1 comprises a block diagram depiction of the invention;

Fig. 2 comprises a flow chart diagram of a transmission sequence;

Fig. 3 comprises a flow chart diagram of an optional process that can be included in the transmission sequence;

Fig. 4 comprises a flow chart depiction of an optional process that can be added to the transmission sequence;

Fig. 5 comprises a diagramatic view of a request-to-talk data package; and

Fig. 6 comprises a flow chart of the reception sequence.

Best Mode For Carrying Out The Invention

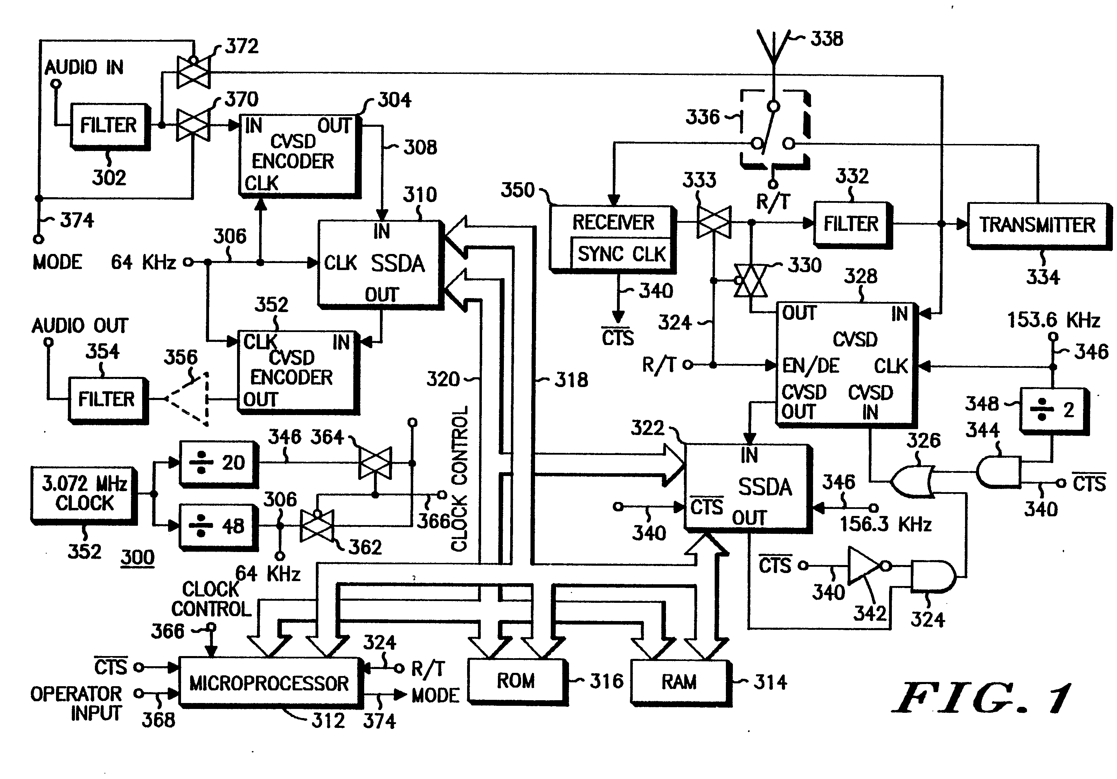

Referring now to Fig. 1, there is shown a block diagram of a full duplex transceiving device in accordance with the present invention. To transmit, a voice signal may be filtered by a first filter (302), which provides an appropriately band-limited audio signal to a first CVSD encoder (304). Preferably, the CVSD encoder (304) is an MC3517 as manufactured by Motorola, Inc., or its functional equivalent. The CVSD encoder (304) digitizes the audio signal at a first rate defined by a first clock signal (306). (Preferably, this clock rate is 64 kHz, although other rates may be used.)

The resulting digitized audio signal (308) is coupled to a first Synchronous Serial Data Adaptor (SSDA) (310). The SSDA (310) receives the digitized signal and, under control of a microprocessor (312), transmits the digitized information to a digital storage device such as random access memory (RAM) (314). (Preferably, the SSDA is an MC6852, and the microprocessor is an MC6803, both as manufactured by Motorola, Inc., although their functional equivalents may be substituted.) Of course, the microprocessor (312) receives its instructions from a read only memory (ROM) (316) and each of the SSDAs, microprocessor(s), RAM-(s), and ROM(s) are interconnected with an address bus (318) and a data bus (320) as well understood in the art.

The stored digitized voice can then be extracted from the RAM (314) and routed to a second SSDA (322) for reconstruction into an analog signal. To transmit this analog signal, the microprocessor (312) places the appropriate logic signal on the receive/transmit (R/T) line (324). The data exits the SSDA (322) and is presented to an AND gate (324). As a second input, the AND gate (324) receives an inverted (342) not-clear-to-send (CTS) signal (340) from the receiver (350). When transmitting a message, the CTS signal (340) is asserted (logic 0), the inverted (342) form of which enables the receiver message to pass through the AND gate (324), to an OR gate (326), and finally to a second CVSD device (328). This CVSD device (328) will operate in the decode mode transmission due to the logical state of the R/T line (324). The R/T line (324) also enables transmission gate (330) and disables reception gate (333).

Thus, the stored digitized signal is routed from the second SSDA (322) to the second CVSD device (328), which converts the message back into an analog signal at a rate defined by a high speed clock signal (346). (Preferably, the frequency of the high speed clock is 153.6 kHz, although other frequencies may be used so long as the frequency of the high speed clock is slightly greater than twice that of the low speed clock signal (306).

The retrieved compressed analog message travels from the second CVSD device (328) through the transmission gate (330) to a filter (332), which removes any remaining quantization noise in the converted signal. The filtered signal is then coupled to the transmitter (334). An antenna switch (336) couples an antenna (338) to the transmitter (334) to allow transmission of the burst analog.

When receiving a message, the microprocessor (312) places the appropriate signal on the R/T line (324). This causes the antenna (338) to be coupled to the receiver (350) via the antenna switch (336). The received signal is routed via the reception gate (333) to the filter (332) and into the second CVSD device (328). In the receive mode, this CVSD device operates as an encoder to digitize the received burst analog signal. (The received signal is also coupled to the transmitter (334), this presents no problem, however, since the transmitter (334) is no longer coupled to the antenna (338). The CVSD device (328) accepts the analog signal and provides a digitized equivalent signal to the second SSDA (322) at the rate provided by the high speed clock (346). The second SSDA (322), under control of the microprocessor (312), then routes the high speed digitized signal to the RAM (314).

This stored signal may be extracted from the RAM (314) and routed to the first SSDA (310), which couples it to a CVSD decoder (352) at the lower data rate (306). This CVSD decoder (352) reconstructs the message as an analog signal and presents it to a filter (354). (Optionally, the decoded signal may be amplified in an amplifier (356) prior to filtering.) The filter (354) appropriately band-limits the received message and also removes any remaining quantization noise from the message. The recovered signal is then provided to any subsequent circuitry such as an audio power amplifier and speaker.

Accordingly, since the transmitter (334) and receiver (350) operate greater than twice the speed of the CVSD encoder (304) and decoder (352), a full duplex conversation may be had using a single communication channel, if so desired.

The conversion of the digitized message back into an analog message prior to transmission affords the present invention the advantages of both digital storage and analog transmission. Some communication system designers opine that reconversion to analog increases the cost and size of a transceiver and, once in digital form, a message may be more efficiently transmitted digitally. The present invention, however, takes a contrary position and teaches that the improved receiver, and thus system, performance more than compensates for any increased cost and size considerations.

Depending upon various factors that might effect choice of transmission and reception strategies, the above described transceiver could be easily modified to allow standard analog transmission and reception in lieu of a burst analog format. For example, by providing two gates (362 and 364) that respond to a clock control signal (366) from the microprocessor (312), the retrieval of digitized data for transmission purposes, or the encoding of digitized data for reception purposes, could selectively be carried out at either the low clock rate (306) or the high clock rate (346). As a result, both burst analog and standard analog communication (in combination with the described digital storage process) can be selected. Further, the microprocessor (312) could make this selection based either upon operator input (368) or control signals as received from another radio.

In addition, by adding two additional gates (370 and 372) that respond to a node signal (374) from the microprocessor (312), the transceiver can accomodate either burst analog communications as described above, or real time analog transmissions. Again, selection of the node could be node responsive to either operator input (368) or control signals from another radio.

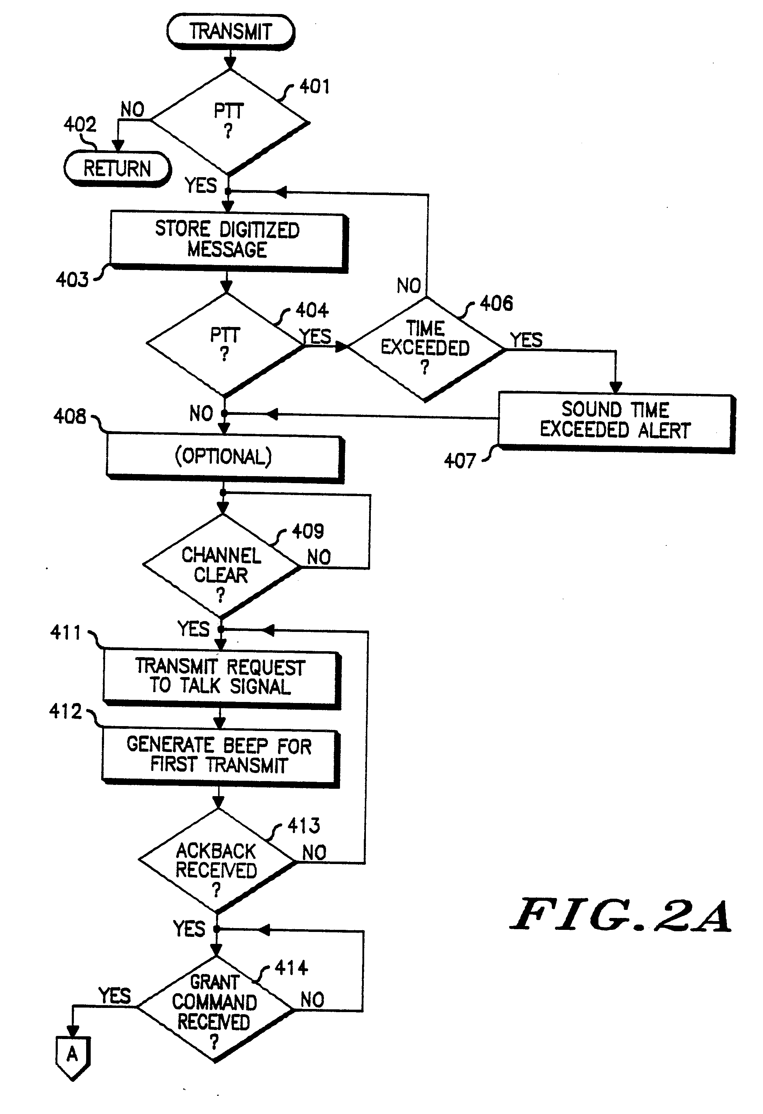

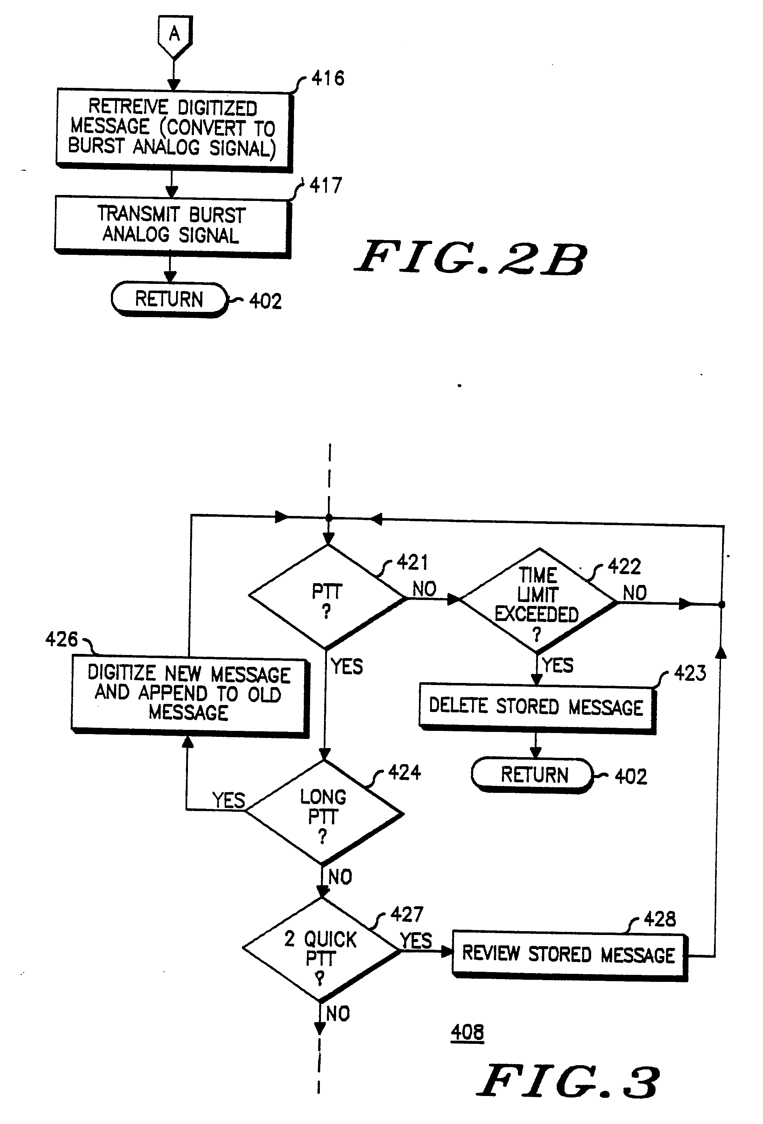

Referring now to Fig. 2, transmission procedure as controlled by the microprocessor (312) will be described.

Appearance of a push-to-talk (PTT) signal as initiated by the operator by closure of the switch on his microphone (not shown) will be monitored (401). If no PTT signal appears, the subroutine will RETURN (402). Assuming, however, that a PTT signal appears, the subsequent audio signal as provided by the user and as rendered into digital form as described above will be appropriately stored by the microprocessor (312) in the RAM (314) (403). As this process continues, the microprocessor (312) will monitor the presence and absence of the PTT signal (404). If a predetermined time period, such as 10 seconds, has not been exceeded (406), the storage process referred to above continues unabated. If the predetermined time period does become exceeded (406), however, a "time exceeded" alert signal can be sounded (407) (such as by causing a prestored signal in the RAM (314) or ROM (316) to be routed to the audio output of the radio (300)), following which the storage process terminates. (Following this, an optional routine (408) as described in more detail below can be executed.)

Following storage of the message, the microprocessor (312) will monitor the communications channel to determine whether a transmission can safely be made (409). When the channel appears clear, the radio will transmit a "request to talk" signal (411). Following this, the microprocessor (312) will generate a beep or other signal for benefit of the radio user for this first transmission of the "request to talk" signal (412), following which the microprocessor (312) will monitor the channel for reception of an acknowledgment back ACKBACK signal (413). In the absence of receipt of an ACKBACK within a predetermined time period, the microprocessor (312) will automatically cause additional subsequent "request to talk" signals to be broadcast.

Following receipt of an ACKBACK (413), the radio (300) then monitors for reception of a grant command from the control base (414). Upon receiving the grant command (414), the microprocessor (312) will cause retrieval of the digitized message from the RAM (314), which digitized message will then be converted to a burst analog signal as described above (416). This burst analog signal can then be transmitted by the transmitter (334) (417), following which the microprocessor (312) will RETURN (402).

Referring now to Fig. 3, the optional subroutine (408) referred to above will now be described.

Following conclusion of the message storage process, the microprocessor (312) can again monitor for presence of a subsequent PTT signal (421). If such a signal does not appear within a predetermined time period (422), the stored message can be deleted (423) and the microprocessor (312) can RETURN (402). By this provision, the message will not be sent following storage unless and until the radio user again closes his push-to-talk switch on his microphone.

If a subsequent PTT signal does appear (421), the microprocessor (312) will analyze the PTT signal to determine whether it appears to be a "long" signal, as would result upon holding the microphone closed for at least a predetermined time period, such as, for instance, 3 seconds (424). If such a long PTT signal does appear (424), the microprocessor (312) could allow the radio user to append an additional message to the previously stored message (426).

**0 271 094**

If a long PTT signal does not appear (424), the microprocessor (312) will next determine whether the subsequent PTT signal appears to be two "quick" signals in succession (427) such as might result when the radio user closes the microphone switch for less than a second, twice, within 3 seconds of each other. If this appears to be the case, the microprocessor (312) can retrieve the stored message from RAM (314) and cause it to be played back through the audio output of the radio (300) (428). In this way, the radio user can review the stored message prior to sending it.

Through provision of the above noted optional subroutine (408), a radio user can delay transmitting a message, can append additional material to a previously stored message, and review a previously stored message to determine the propriety of either of the above actions.

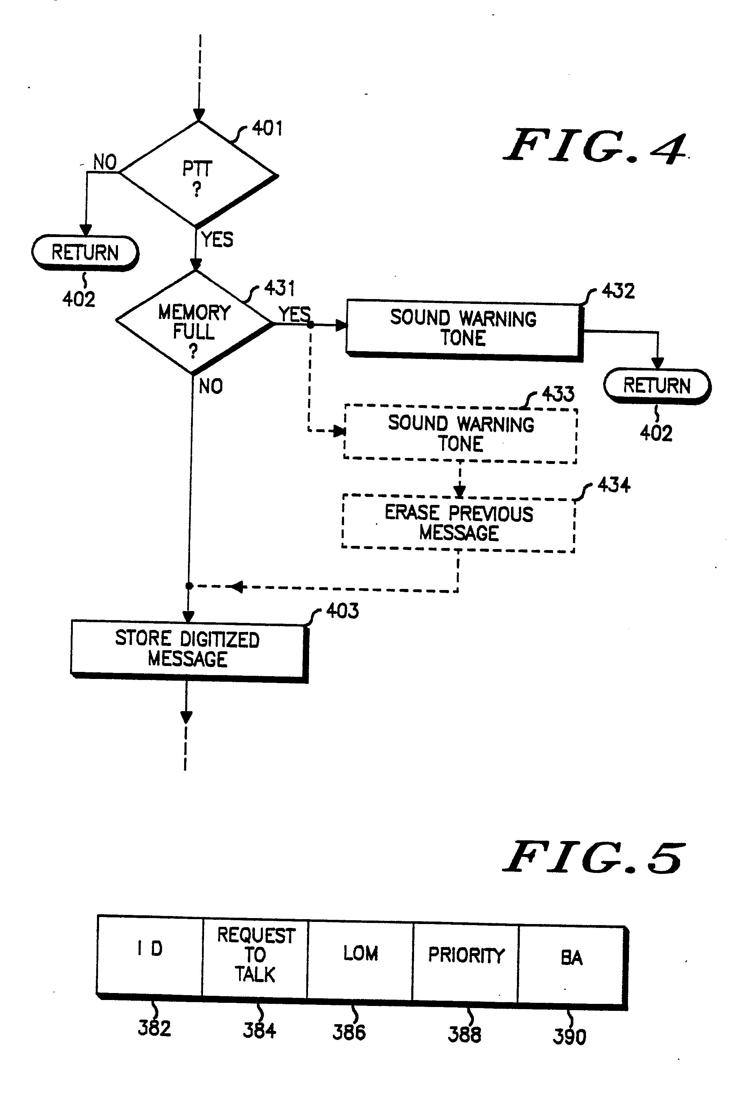

Referring now to Fig. 4, yet another variation which can be made with respect to the basic transmission routine described above will now be set forth.

Following the initial sensing of a PTT signal (401), the microprocessor (312) can make a determination as to whether the available memory in RAM (314) has been exceeded (431). If memory has not been exceeded, then the digitized message can be stored as described above. If, however, memory has been exceeded, a warning tone can be sounded (432) and the microprocessor (312) can RETURN (402). This would, in effect, prevent storing any new messages until previously stored messages have been transmitted. In the alternative, and as indicated by phantom lines in Fig. 4, a warning tone can be sounded (433) and a previously stored message can be erased (434) to make room for the new message. If desired, selection between these two alternatives could be made available to the radio user by provision of an appropriate operator input (368) (Fig. 1).

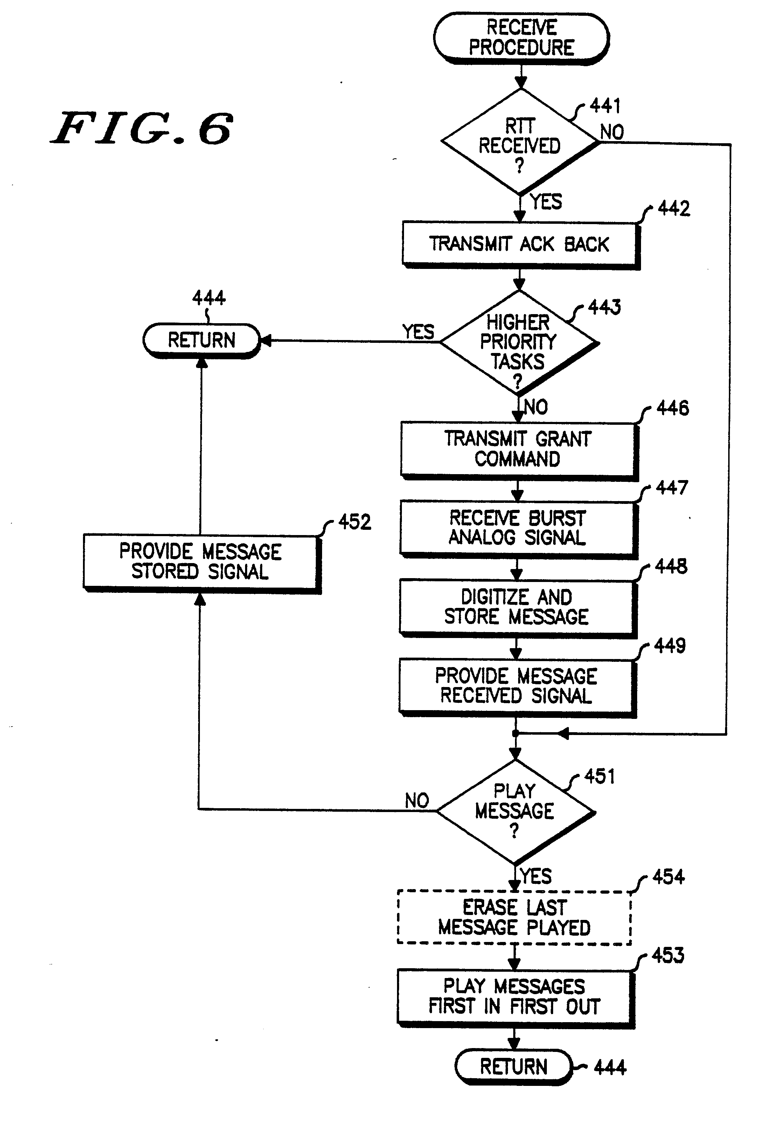

As described above, the transmission process contemplates transmission of a "request-to-talk" (RTT) signal. This signal can be used by a base station as described below to control when the radio transmits the stored message, thereby minimizing transmission collisions between competing radios. With reference to Fig. 5, this RTT signal will now be described.

The RTT may be comprised of a short data packet that includes bit fields that convey information to the base station. These bit fields may be of various sizes as befits the size of the information to be conveyed. The first bit field (382) may be, for example, the ID for that radio. The next bit field (384) contains a bit or bits that identifies this message as an RTT signal. The third bit field (386) may optionally contain information regarding the length of the message to be transmitted, such as the number of real time seconds or a general indicator of length, such as "short" or "long". Such information might be advantageously used by the base station to effeciently schedule its grant commands in conjunction with completing its other tasks.

The forth bit field (388) may include priority information, which might be used by a base station to determine which received message should be played back first. Finally, the fifth bit field (390) may identify the transmission as a burst analog (BA) signal, or as a real time analog signal.

Other information could of course be included as might be pertinent in a given situation, and the order of the bit fields could be reorganized as necessary. Other bit fields could also be provided to allow synchronization or error correction, as well understood in the art.

Referring now to Fig. 6, a reception routine as particularly useful in a base station radio will now be described.

Microprocessor (312) begins by sensing reception of an RTT signal (441). Upon receiving such a signal, the microprocessor (312) causes transmission of an ACKBACK signal (442). Following this, the microprocessor (443) determines whether other, higher priority functions need to be processed (443). If so, the microprocessor (312) will RETURN (444).

Presuming that other higher priority items do not exist, the microprocessor (312) causes transmission of a grant command (446). The microprocessor (312) then awaits reception of a burst analog signal from the requesting radio (447). The incoming burst analog signal will be digitized, and the resulting digitized data will be stored in memory under control of the microprocessor (312) (448). Following reception of the message, the microprocessor (312) can optionally cause transmission of a "message received" signal to the transmitting unit (449).

The microprocessor can then determine whether the received message should be played back for the operator (451). If the message should not then be played back (when, for instance, another message is playing back, or the operator has toggled a switch preventing such a playback), a "message received and stored" signal can be provided to the system operator, such as by provision of a distinct beep (452). When the messages are to be played back, the messages can be played in the order received (453). Following playback of all stored messages, the microprocessor (312) can RETURN (444).

In the alternative, when messages are to be played back, the microprocessor (312) can first erase from memory the last message played (454), followed by playback of the first message in storage (456). By provision of this alteration, stored messages will not be played until a decision has been made, for instance, by the operator, to play the next stored message. In this way, provision can be made for an operator to replay a message that he has already heard if he so desires.

Through provision of the above described system, burst analog signals can be easily and readily coded and decoded, with transmissions of these signals being controlled by a base station to minimize collision. As a result, spectral efficiency results.

Those skilled in the art will recognize that various modifications and changes could be made as regards the above described invention without departing from the spirit of the invention described above. It be considered as being limited to the precise embodiment set forth in the absence of specific limitations directed to such embodiments.

## Claims

1. A radio transmitter having:

microphone means for receiving an acoustic input signal and for converting said acoustic input signal into an electrical signal;

signal processing means for receiving said electrical signal and for converting said electrical signal into a second signal;

modulation means (334) for modulating a carrier signal with said second signal to provide an output signal; and

transmission means (334) for receiving said output signal and for transmitting said output signal; wherein the radio transmitter is characterized by signal processing means that includes:

A) analog-to-digital conversion means (304) for converting said second signal into digitized data having a first rate;

B) memory means (314) for storing said digitized data;

C) retrieval means (322) for retrieving said digitized data at a second rate, wherein said second rate is faster than said first rate; and

D) digital-to-analog conversion means (328) for converting said retrieved digitized data into an analog signal, which analog signal is provided to said modulation means in place of said second signal.

2. The improvement of claim 1 wherein said second rate is at least twice said first rate.

3. The improvement of claim 1 wherein said memory means has capacity to store at least 10 seconds worth of real time accoustic input signal as converted into said digitized data.

4. A radio receiver having:

receiver means (350) for receiving a carrier signal having an analog signal modulated thereon;

demodulation means (350) for segregating said analog signal;

signal processing means for receiving said analog signal and for providing a second signal in response thereto; and

audio means for rendering said second signal audible; wherein the radio receiver is characterized by signal processing means that includes:

A) analog-to-digital conversion means (328) for converting said analog signal into digitized data having a first rate;

B) rate conversion means (322, 314, 310) for converting said first rate into a second rate, which second rate is slower than said first rate;

C) digital-to-analog conversion means (352) for converting said digitized data having a second rate into an analog output signal, which analog output signal is provided to said audio means in place of said second signal.

5. The improvement of claim 4 wherein said rate conversion means includes memory means (314) for storing said digitized data.

6. The improvement of claim 5 wherein said rate conversion means retrieves said digitized data from said memory means at said second rate.

7. The improvement of claim 5 wherein said memory means can store at least 10 seconds of real time analog output signal as represented by said digitized data.

8. The improvement of claim 4 wherein said first rate is at least twice said second rate.

9. A radio communications system having at least one transmitter and one receiver, wherein:

said at least one transmitter includes:

microphone means for receiving an acoustic input signal and for converting said acoustic input signal into an electrical signal;

transmission signal processing means for receiving said electrical signal and for converting said electrical signal into an analog output signal, wherein said transmission signal processing means includes:

A) first analog-to-digital conversion means (304) for converting said electrical signal into digitized data having a first rate;

B) memory means (314) for storing said digitized data;

C) retrieval means (322) for retrieving said digitized data at a second rate, wherein said second rate is faster than said first rate; and

D) first digital-to-analog conversion means (328) for converting said retrieved digitized data into said analog output signal;

modulation means (334) for modulating a carrier signal with said analog output signal to provide an output signal; and

transmission means (334) for receiving said output signal and for transmitting said output signal;

and wherein said at least one receiver includes:

receiver means (350) for receiving said output signal;

demodulation means (350) for segregating said analog output signal from said output signal;

receiver signal processing means for receiving said segregated analog output signal and for providing a recovered analog output signal in response thereto,

wherein said receiver signal processing means includes:

A) second analog-to-digital conversion means (328) for converting said segregated analog output signal into digitized data having said second rate;

B) rate conversion means (322, 314, 310) for converting said second rate into said first rate;

C) second digital-to-analog conversion means (352) for converting said digitized data having said first rate into said recovered analog output signal; and

audio means for rendering said recovered analog output signal audible.

10. The radio communications system of claim 9 wherein said rate conversion means of said receiver includes memory means (314) for storing said digitized data.

11. The radio communications system of claim 9 wherein said second rate is at least twice said first rate.

FIG. 1

FIG.2A

0 271 094

A

RETREIVE DIGITIZED
MESSAGE (CONVERT TO
BURST ANALOG SIGNAL) ⌐416

TRANSMIT BURST
ANALOG SIGNAL ⌐417

*FIG.2B*

RETURN ⌐402

PTT
? ⌐421 — NO → TIME
LIMIT
EXCEEDED
? ⌐422 — NO →

426 ⌐ DIGITIZE NEW MESSAGE
AND APPEND TO OLD
MESSAGE

YES

YES

DELETE STORED MESSAGE ⌐423

LONG
PTT
? ⌐424

YES

RETURN ⌐402

NO

2 QUICK
PTT
? ⌐427 — YES → REVIEW STORED MESSAGE ⌐428

NO

408

*FIG.3*

# FIG.4

401

PTT
?

NO → RETURN
402

YES

431 MEMORY FULL ? — YES → 432 SOUND WARNING TONE → RETURN 402

NO

433 SOUND WARNING TONE

434 ERASE PREVIOUS MESSAGE

403 STORE DIGITIZED MESSAGE

# FIG.5

| I D | REQUEST TO TALK | LOM | PRIORITY | BA |
|-----|-----------------|-----|----------|-----|
| 382 | 384 | 386 | 388 | 390 |

# FIG.6

RECEIVE PROCEDURE

441 — RTT RECEIVED ? — NO

YES

442 — TRANSMIT ACK BACK

443 — HIGHER PRIORITY TASKS ?

YES — RETURN — 444

NO

446 — TRANSMIT GRANT COMMAND

447 — RECEIVE BURST ANALOG SIGNAL

448 — DIGITIZE AND STORE MESSAGE

449 — PROVIDE MESSAGE RECEIVED SIGNAL

451 — PLAY MESSAGE ?

NO — 452 PROVIDE MESSAGE STORED SIGNAL

YES

454 — ERASE LAST MESSAGE PLAYED

453 — PLAY MESSAGES FIRST IN FIRST OUT

RETURN — 444